# EUROPEAN PATENT SPECIFICATION

(11) **EP 2 129 045 B1**
(45) Date of publication and mention of the grant of the patent: **20.05.2015**
(21) Application number: 07850686.2
(22) Date of filing: 17.12.2007
(51) Int. Cl.: H04L 12/40, H04L 12/403

(54) **MASTER SLAVE COMMUNICATION SYSTEM AND MASTER SLAVE COMMUNICATION METHOD**
MASTER-SLAVE-KOMMUNIKATIONSSYSTEM UND MASTER-SLAVE-KOMMUNIKATIONSVERFAHREN
SYSTÈME DE COMMUNICATION MAÎTRE-ESCLAVE ET PROCÉDÉ DE COMMUNICATION MAÎTRE-ESCLAVE

(30) Priority: 27.12.2006 JP 2006352122
(43) Date of publication of application: 02.12.2009
(73) Proprietor: Kabushiki Kaisha Yaskawa Denki, Kitakyushu-shi, Fukuoka 806-0004 (JP)
(72) Inventor: FUKUDA, Mamoru, Fukuoka 806-0004 (JP); SATOU, Tatsuhiko, Fukuoka 806-0004 (JP)
(74) Representative: Gendron, Vincent Christian
(86) International application number: PCT/JP2007/074198
(87) International publication number: WO 2008/078585

(56) References cited:
- EP-A2- 1 198 096
- WO-A1-2005/057881
- WO-A1-2005/119969
- WO-A1-2005/119969
- JP-A- 2006 254 290

## Description

### Technical Field

The present invention relates to a master/slave communication system in which one master is connected to multiple slaves through a serial transmission line, and control data is exchanged between the master and the slaves in a predetermined communication period.

### Background Art

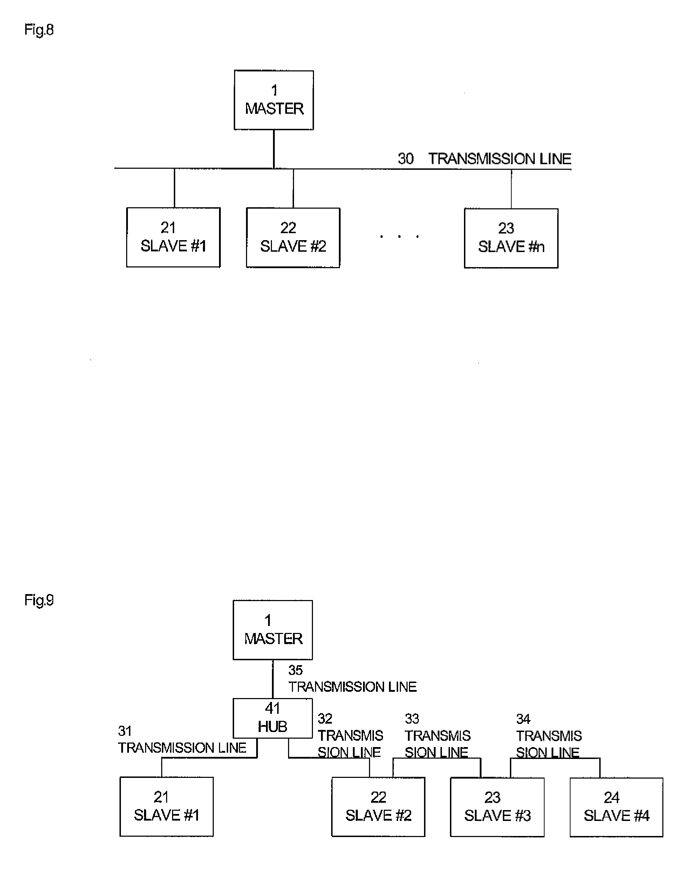

Generally in a manufacturing apparatus, a control device such as a PLC or a personal computer functions as a master, and multiple slave devices such as a sensor, a relay, and a motor periodically exchange control data with the master. Fig. 8 is a system configuration example of a master/slave communication system. One master device is connected to multiple slave devices via a transmission line 30. At a manufacturing site, control data may often be damaged on the transmission line due to, for example, noise generated from a machine or a relay device. Therefore, re-execution of exchange of control data is needed as means for enhancing the transmission reliability.

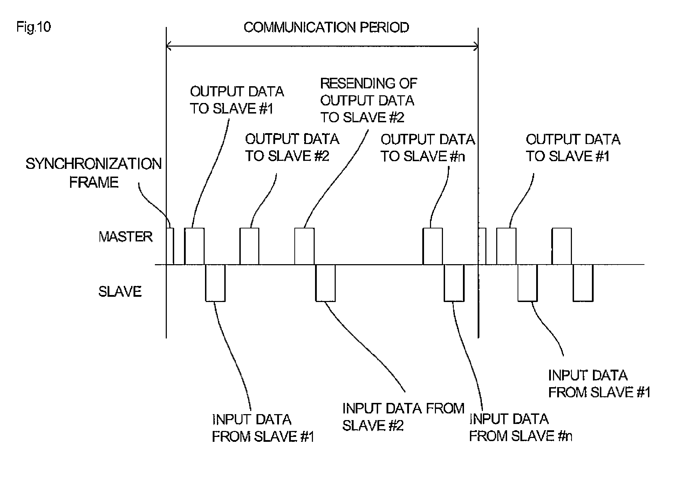

In general, communication resending, including re-execution of exchange of control data, is sequentially executed. A prior art example in which this is applied to a master/slave communication system that performs periodical communication is illustrated in Fig. 10. Fig. 10 is an example in which the master performs exchange of control data with the individual slaves in a sequential manner after sending a notification of the start of a communication period at the beginning of the communication period. A notification of the start of a communication period is used to notify a slave of a latch timing of input/output data. Control data sent from the master to each slave is used to transfer output data to the relay or a command value to the motor. Control data sent from each slave to the master is used to transfer input data of the sensor or a current value of the motor. Hereinafter, exchange of control data is used to mean both sending of command data from the master to a slave and receiving of response data from the slave. Also, the size of command data to a slave and the size of response data from the slave need not be the same.

Fig. 10 illustrates the case where output data to a slave #2 is damaged due to noise or the like, and the slave #2, which fails receiving the output data, sends no response to the master. As above, in the scheme where exchange of control data is re-executed individually for each slave (hereinafter simply stated as resending), if the number of slaves for which resending is to be performed increases, there is a problem that the communication period is exceeded, and fluctuation occurs in the communication period. Thus, there is a problem that it is necessary to set in advance a communication period with sufficient margin for allowing resending to be performed for all the slaves.

In accordance with this problem, in the scheme in Japanese Patent No. 3628042, a master includes a resending counter TXN for each slave and a resending total counter TXC for counting the total number of times resending is performed. This patent discloses a scheme of performing resending when the count value of the resending counter is less than or equal to a limit value set in advance for each slave, and when the count value of the resending total counter is also less than or equal to a preset limit value (hereinafter called a scheme 1) (Fig. 11 (Patent Document 1, Fig. 1)). Also, Japanese Patent No. 3628042 discloses, as a different scheme, a scheme in which a master includes a resending counter TXN for each slave and a time counter TCNT for counting the time spent for resending. This scheme performs resending when the count value of the resending counter is less than or equal to a limit value set in advance for each slave, and when the count value of the time counter is also less than or equal to a preset limit value (hereinafter called a scheme 2) (Fig. 12 (Patent Document 1, Fig. 3)).

[Patent Document 1] Patent No. 3628042, Fig. 1 and Fig. 3

### Disclosure of Invention

### Problems to be Solved by the Invention

However, in order to prevent fluctuation from occurring in a communication period, in the conventional scheme 1, it is necessary to determine the limit number of times resending is performed on the basis of a slave whose communication time needed to exchange control data (hereinafter simply stated as a communication time) is the longest, and accordingly, it is necessary to extend the communication period.

Since the communication time includes a time for transmission of command data from the master to a slave and a time for transmission of response data from the slave to the master, the communication time depends on the data length and the transmission speed of the command data and the response data. Besides, the communication time depends on the topology of a network. For example, in a network as in RS-485 where connected devices and a transmission line are connected in parallel, the transmission delay is constant for all the devices, and the value of the transmission delay can be regarded as a signal propagation delay on the transmission line. In contrast, as in IEEE 1394 whose connection example is illustrated in Fig. 9, in a network in which connected devices and a transmission line are cascade-connected or connected in series, it is necessary to take into consideration, besides the foregoing signal propagation delay, a relay delay due to a delay that occurs when a signal is relayed using a device connected between a sending destination device and a sending source device. A similar relay delay occurs also in Ethernet (registered trademark) using a twisted pair cable. In particular, the relay delay becomes striking when store/forward-type switching HUB is relayed in Ethernet (registered trademark). Thus, even when the data length of control data is the same, the communication time becomes different depending on the connection position. In addition, as a time that needs to be taken into consideration for the communication time, there is a response processing time from when a slave receives command data to when the slave sends response data. As described above, in order to calculate a communication time necessary for determining the limit number of times resending is performed, it is necessary to perform complicated calculations, taking into consideration individual elements for each of the slaves.

The conventional scheme 2 uses the time counter instead of the resending total counter in the conventional scheme 1 and counts the actually spent time. Thus, even when the communication time is different for each slave, there is no need to perform complicated calculations. In this scheme, since the actually spent time is counted, even when it is determined that the counted time is less than the upper time limit before resending is performed, the communication period may be exceeded as a result of executing resending. In particular, fluctuation in the communication period becomes greater when the data length of control data is large or when the transmission line delay is large.

In addition, since resending is sequentially executed in both the conventional schemes 1 and 2, resending to a slave that is allocated to the beginning of the communication period is given priority, and no resending may be performed for subsequent stations.

In a motion control system including machine tools and mounters, a motion controller which is a master forms a control loop with slave devices through communication. Thus, control data is often damaged on a transmission line due to, for example, noise generated from a machine or a relay device. Therefore, resending is needed as means for enhancing the transmission reliability. However, because of resending, when fluctuation occurs in the communication period in the motion control system, the sending timing of control data and the obtaining timing of the current position become unstable, resulting in a problem that the control accuracy is degraded. Furthermore, in order to perform high-speed control, the period of the control loop needs to be shortened. There is a problem that extending the communication period on the basis of the maximum communication time for the purpose of resending results in degradation of the control performance.

The present invention has been made in view of these problems, and it is an object of the present invention to provide a communication system that can exchange control data in a communication period in which no fluctuation occurs even when resending is performed.

### Means for Solving the Problems

In order to solve the foregoing problems, the present invention is defined in the independent claims. The dependent claims define particular embodiments of the invention.

### [Advantages]

According to the inventions described in the claims even when a communication error occurs due to the effect of noise in exchange of control data in a predetermined communication period, resending thereof is managed using an expected time, whereby resending can be reliably performed within a predetermined time, and no fluctuation occurs in the communication period.

According to the inventions described in the claims since the expected communication time is counted using an actual system, no complicated computations are necessary for calculations.

According to the inventions described in claims 6 and 12, the expected communication time needed for exchange of control data of each slave is re-counted during exchange of the control data, whereby the expected communication time can be more accurately counted, and resending can be managed with higher accuracy.

### Brief Description of Drawings

[Fig. 1] Fig. 1 is a block diagram of a master in a first embodiment of the present invention.
[Fig. 2] Fig. 2 is a diagram illustrating a list of slave information in the first embodiment of the present invention.
[Fig. 3] Fig. 3 is a diagram illustrating the structure of a resending list in the first embodiment of the present invention.
[Fig. 4] Fig. 4 is a flowchart illustrating an operation example of an expected-communication-time counting process in the first embodiment of the present invention.
[Fig. 5] Fig. 5 is a communication timing chart in the first embodiment of the present invention.
[Fig. 6] Fig. 6 is a flowchart illustrating an operation example of a control-data exchange process performed using a master in the first embodiment of the present invention.
[Fig. 7] Fig. 7 is a flowchart illustrating an operation example of a control-data exchange process performed using the master in a second embodiment of the present invention.
[Fig. 8] Fig. 8 is a system configuration diagram of a master/slave communication system to which the present invention is applied.
[Fig. 9] Fig. 9 is a system configuration example of a master/slave communication system to which the present invention is applied, using IEEE 1394.
[Fig. 10] Fig. 10 is a timing chart illustrating a communication timing in a conventional method.

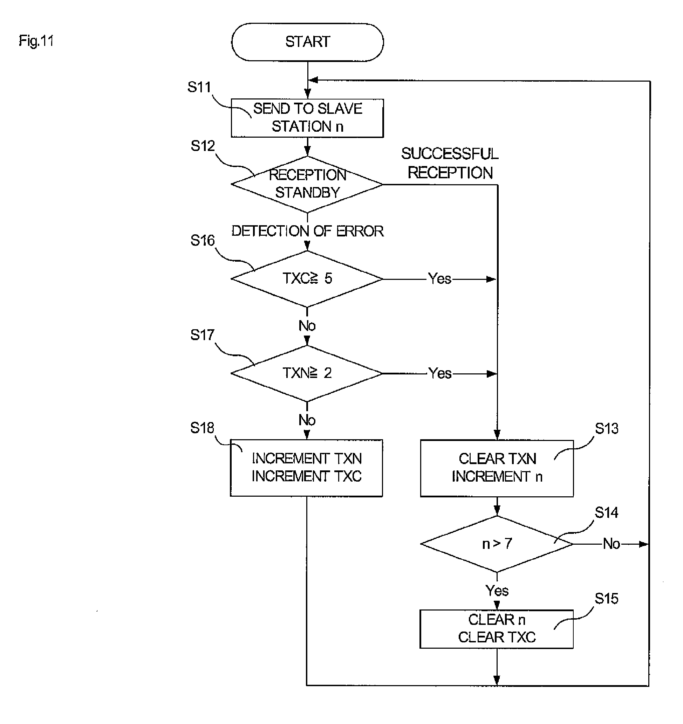

[Fig. 11] Fig. 11 is a flowchart illustrating an operation example of a control-data exchange process in a conventional scheme 1.

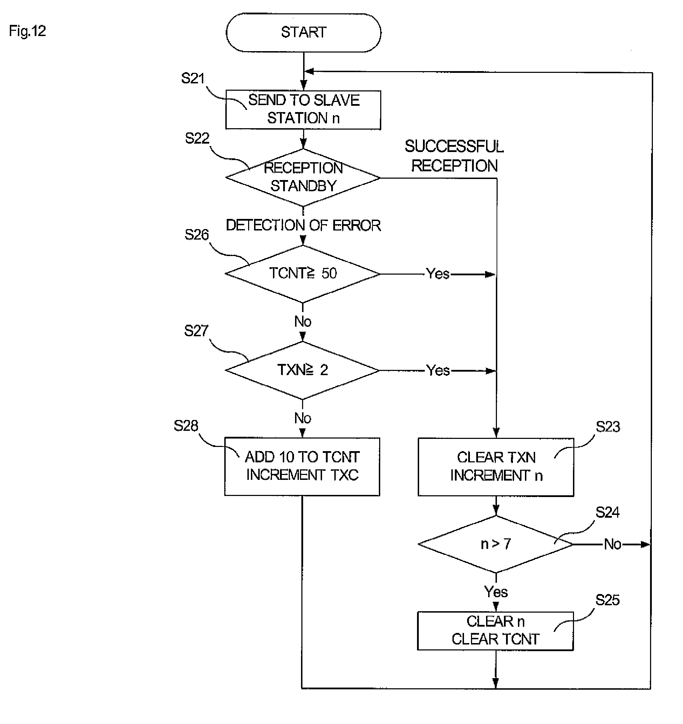

[Fig. 12] Fig. 12 is a flowchart illustrating an operation example of a control-data exchange process in a conventional scheme 2.

### Reference Numerals

1: master
21-23: slaves
30-35: transmission lines
41: HUB
110: device-unique control unit
120: storage unit
121: sending buffer
1211, 1212, 121n: sending buffers of slaves #1, #2, and #n
122: receiving buffer
1221, 1222, 121n: receiving buffers of slaves #1, #2, and #n
123: resending list
1232: resending slave number
1233: resending slave selection
1234: resending slave list
1235: upper resending time limit
1236: remaining resending time
1237: communication period
124: slave list
12411: station address of slave #1
12421: pointer to sending buffer of slave #1
12431: pointer to receiving buffer of slave #1
12441: expected communication time of slave #1
130: communication control unit
131: communication period timer
132: counting timer

### Best Mode for Carrying Out the Invention

Specific embodiments of a method of the present invention will be described below on the basis of the drawings. Hereinafter, portions given the same instrument references indicate the same details, even in different drawings.

### First Embodiment

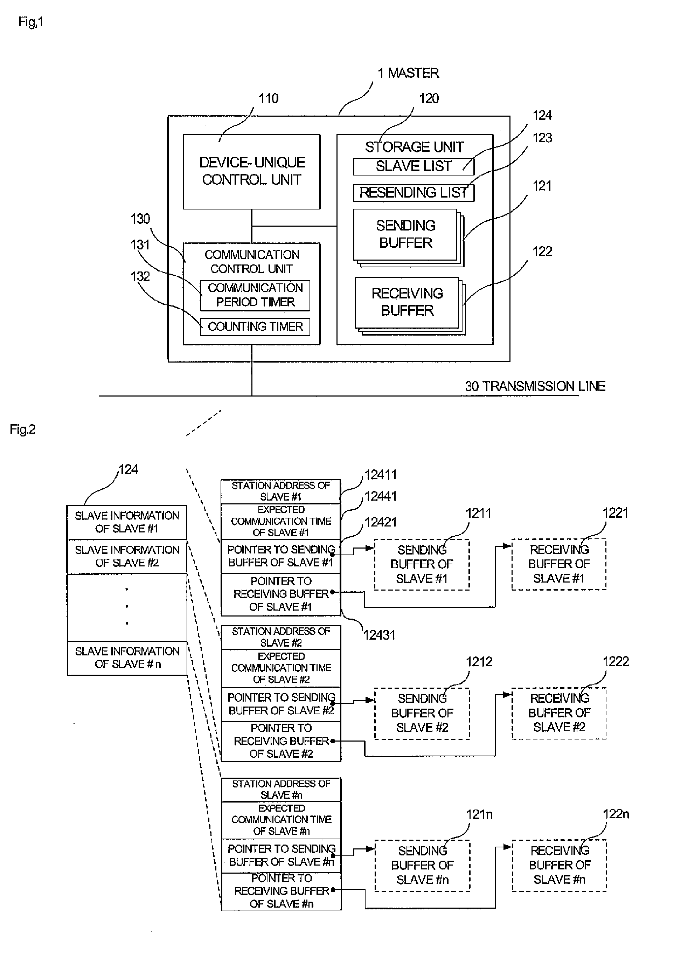

Fig. 1 is a block diagram of a master according to a first embodiment of the present invention. The master includes a device-unique control unit 110, a storage unit 120, and a communication control unit 130. The master is connected via the communication control unit 130 to a transmission line 30. The device-unique control unit 110 is a portion that analyzes response data received from a slave and generates next command data in accordance with predetermined control logic. The generated command data is stored in a sending buffer 121 in the storage unit 120, and the stored command data is sent to a slave using the communication control unit 130.

Also, the response data received from the slave is stored in a receiving buffer 122 in the storage unit 120 using the communication control unit 130, and the stored response data is read to the device-unique control unit 110. Also, the master includes a resending list 123 in which a slave to which sending of control data fails or a slave from which receiving of response data fails is registered, that is, a slave that fails exchanging control data is registered, and a slave list 124 that stores information regarding a slave connected to a transmission line.

Fig. 2 is a diagram illustrating the structure of the slave list 124 in the first embodiment. The slave list is configured by a sequence of slave information storing information regarding each slave. The slave information has a station address 12411 of each slave, a pointer 12421 to the sending buffer, and a pointer 12431 to the receiving buffer. In addition, as a feature of the present invention, the slave information includes an expected communication time 12441 that stores the time from the start of sending control data to a slave to the reception of response data from the slave, that is, the time needed to exchange control data.

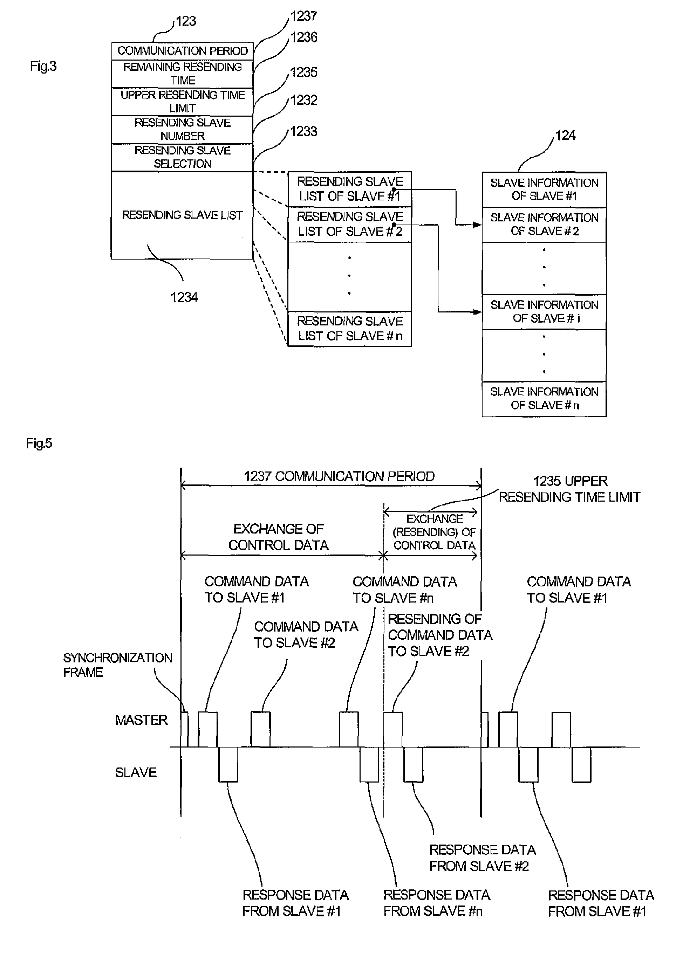

Fig. 3 is a diagram illustrating the structure of the resending list 123 in the first embodiment.
The resending list 123 includes a communication period 1237; an upper resending time limit 1235 storing the maximum value of time that can be used for resending in the communication period; a resending slave number 1232 storing the number of slaves to which resending is to be performed, in which errors are detected during exchange of control data; a resending slave list 1234 storing pointers to slave information of the slaves; a resending slave selection 1233 indicating a slave, in the resending slave list 1234, to which resending is currently being performed; and a remaining resending time 1236 storing time that can be used to perform resending in the communication period.

The communication period 1237 and the upper resending time limit 1235 are set before the start of exchange of control data, and are not changed after the start of exchange of control data. Here, the upper resending time limit 1235 may be set by a user, together with the communication period. Alternatively, the upper resending time limit 1235 may be a time obtained by subtracting the total expected communication times of all slaves from the communication period.

In contrast, in every communication period, the resending slave number 1232 is initialized to zero, and the remaining resending time 1236 is initialized to the upper resending time limit 1235. The resending slave number 1232 is incremented by one when sending of command data or receiving of response data fails during exchange of control data and is decremented by one when exchange of control data is successfully completed by executing resending. Every time resending is executed, regardless of the resending result, the expected communication time 12441 of a slave to which resending is performed is subtracted from the remaining resending time 1236.

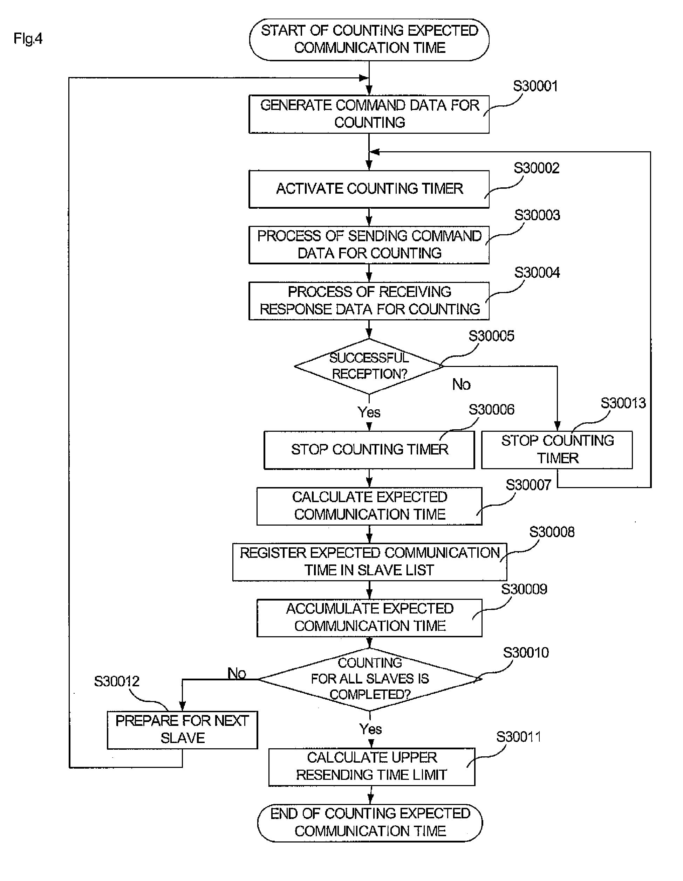

Next, a method of counting the expected communication time 12441 in the first embodiment will be described using Fig. 4. This flow is to be executed at an arbitrary timing before the master starts exchanging control data. In the following description, a communication period timer 131 may be used as a timer stated as a counting timer 132.

At first, the master generates command data for counting the expected communication time (S30001). The command data for counting, which is generated at this time, has the same data length as command data to be sent from the master to a slave for which counting is performed at the time of exchanging control data. Similarly, each slave generates response data for counting (not illustrated in the drawings), which has the same data length as response data to be sent to the master at the time of exchanging control data.

Next, the master activates the counting timer 132 (S30002), sends the command data for counting (S30003), and receives from the slave the response data for counting (S30004). When the master successfully receives from the slave the response data for counting, the master stops the counting timer 132 (S30006), calculates the expected communication time from the current time of the timer (S30007), registers the expected communication time in the expected communication time 12441 of the slave in the slave list 124 (S30008), and accumulates the calculated expected communication time (S30009).

The master repeats the procedure from the foregoing S30001 to S3009 for all the slaves registered in the slave list 124. Thereafter, the master calculates, as the upper resending time limit, the difference between the accumulated value of the expected communication times calculated in the foregoing S30009 and the communication period 1237 in the resending list 123 (S30011). The calculated upper resending time limit is stored in the upper resending time limit 1235 in the resending list 123. In this example, the command data for counting and the command data for control data have the same data length, and the response data for counting and the response data for control data have the same data length. However, these items of data may not have the same data length, and transmission times may be corrected for differences in data length at the time of calculating the expected communication time.

As above, the method of counting the expected communication time in accordance with this procedure does not require complicated calculations even when a relay time and a response processing time are different in each device depending on the type of connected device, and even when a signal propagation delay is different in each transmission line depending on each transmission line length.

Fig. 5 is a communication timing chart according to the first embodiment of the present invention.
A communication period in this example includes a band for performing exchange of control data and a band for re-executing this. In the band for exchanging the control data, the master first broadcasts a synchronization frame indicating the start of a communication period, and then executes exchange of control data individually with each slave. Here, if there is a slave to which sending of command data fails or a slave from which receiving of response data fails, the master registers the slave in the resending list 123. Next, the master performs resending in accordance with the registration in the resending list 123. Here, when exchange of the entire control data is executed successfully, message communication may be executed using the band for performing resending. Also, when resending is to be performed, message communication may be executed within the range of time left before the end of the communication period (not illustrated in the drawings).

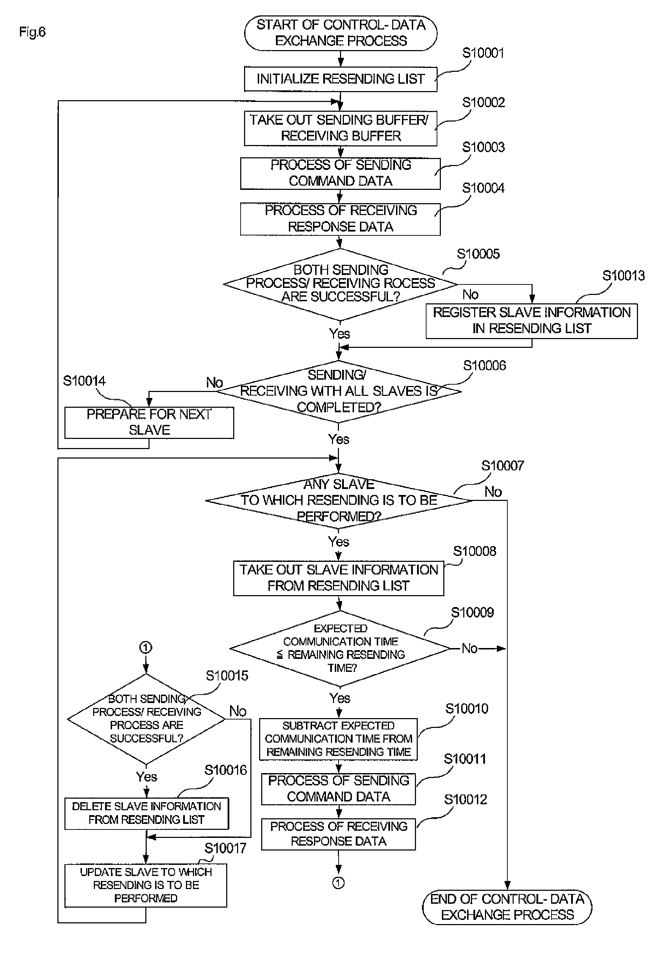

Fig. 6 is a flowchart illustrating an operation example of a control-data exchange process performed in each communication period using the communication control unit 130 in the master. This flowchart is activated every time at the timing of the start of a communication period.

The communication control unit 130 initializes the resending list 123 at the timing of the start of a communication period (S10001). Specifically, the communication control unit 130 clears the resending slave number 1232 to zero and substitutes the upper resending time limit 1235 for the remaining resending time 1236. Next, the communication control unit 130 takes out the sending buffer and the receiving buffer of a slave from slave information registered at the beginning of the slave list 124 from the storage unit (S10002) and sends command data to the slave (S10003). After sending, the communication control unit 130 receives response data from the slave (S10004).

Here, when the communication control unit 130 fails sending the command data or receiving the response data, the communication control unit 130 registers slave information of the slave in the resending list 123 (S10013). Specifically, registration of the slave information means that a pointer to the slave information is stored in a sequence element in the resending slave list 1234, which has the resending slave number 1232 as a sequence element number, and, at the same time, the resending slave number 1232 is incremented by one.

Also, when the value of the resending slave number 1232 prior to being incremented is zero, the head pointer in the resending slave list 1234 is stored in the resending slave selection 1233. When the communication control unit 130 successfully sends the command data and receives the response data, no updating of the resending list 123 is performed. In order to perform the foregoing procedure for each of the slaves in the registered order in the slave list 124, the communication control unit 130 takes out slave information of the next slave from the slave list 124 (S10014), and repeats the procedure from step S10002.

When sending/receiving with all the slaves is completed, the communication control unit 130 refers to the resending slave number 1232 and determines whether a slave to which resending is to be performed is registered (S10007). When a target slave to which resending is to be performed is registered, that is, when the number of the resending slave number 1232 is one or more, the communication control unit 130 takes out the registered slave information in a sequential manner from the beginning of the resending slave list 1234. Here, the communication control unit 130 compares the remaining resending time 1236 with the expected communication time 12441 of the slave (S10009), and, when the remaining resending time 1236 is longer than the expected communication time 12441, the communication control unit 130 subtracts the expected communication time 12441 from the remaining resending time 1236, and performs resending (S10011 and S10012). When the remaining resending time 1236 is shorter than the communication time 12441, the control-data exchange process is terminated.

When resending is performed, the communication control unit 130 determines whether sending of command data and receiving of response data are successfully completed (S10015). When both are successful, the communication control unit 130 deletes the slave information of the slave from the resending list 123 (S10016). Deletion of the slave information means deletion of the pointer to the slave information, which is registered in the sequence element indicated by the resending slave selection 1233 in the resending slave list 1234, and decrementing of the resending slave number 1232 by one.

When resending is performed, regardless of the resending result, the communication control unit 130 updates the resending slave selection 1233 to the next slave in the resending slave list 1234 (S10017), and thereafter repeats the flow from step S10007. On this occasion, when the resending slave selection 1233 prior to being updated indicates the last registered slave in the resending slave list 1234, the resending slave selection 1233 is updated so as to indicate the first slave registered in the resending slave list 1234.

Accordingly, slaves registered in the resending list 123 are equally given chances for resending. Furthermore, even when resending fails, resending can be repeatedly performed as long as there is a remaining resending time.

### Second Embodiment

Next, a second embodiment of the present invention will be described. Here, since the block diagram of the master, the structure of the slave list, the structure of the resending list, the method of counting the expected communication time, and the communication timing chart in the second embodiment are the same as those in the first embodiment, descriptions thereof are omitted.

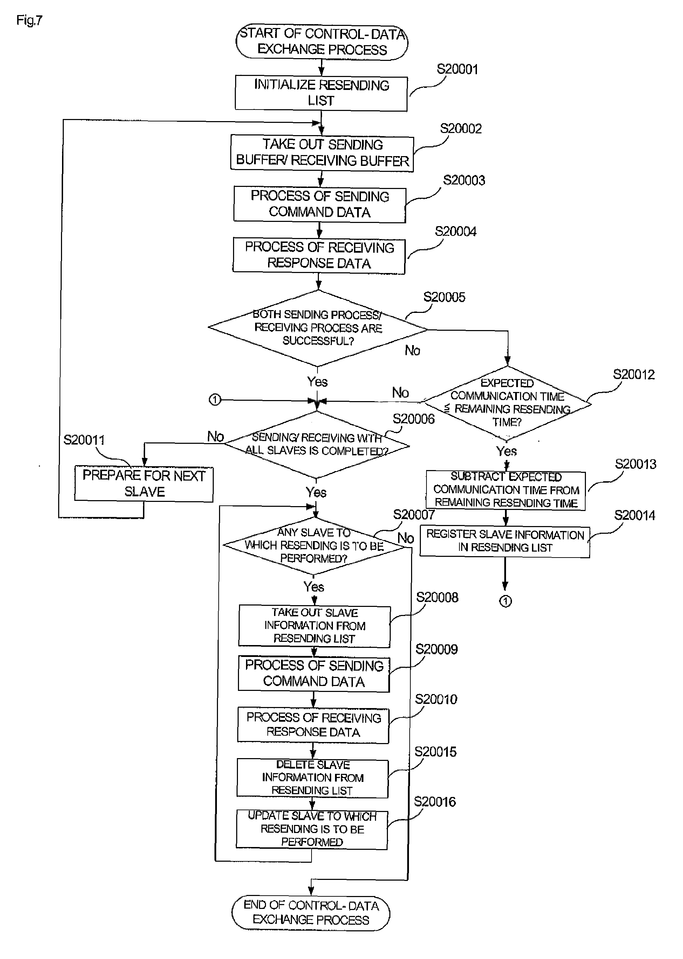

Fig. 7 is a flowchart illustrating an operation example of a control-data exchange process performed in each communication period using the communication control unit 130 in the master in the embodiment. This flowchart is activated every time at the timing of the start of a communication period, as in the first embodiment. Also in the second embodiment, the procedure in which the communication control unit 130 initializes the resending list 123 at the timing of the start of a communication period (S20001), sequentially sends command data to slaves in the registered order in the slave list 124 (S20003), and receives response data from the slaves (S20004) is the same as that in the first embodiment.

However, in the second embodiment, when the communication control unit 130 fails sending the command data or fails receiving the response data, the communication control unit 130 compares the slave's expected communication time 12441 with the remaining resending time 1236 (S20012), and, when the expected communication time 12441 is less than or equal to the remaining resending time 1236, subtracts the expected communication time 12441 from the remaining resending time 1236 (S20013), and registers slave information of the slave in the resending list 123 (S20014).

In contrast, when the expected communication time 12441 is greater than the remaining resending time 1236, no registration of the slave information in the resending list 123 is performed.

When sending/receiving with all the slaves is completed, the communication control unit 130 refers to the resending slave number 1232 and determines whether a slave to which resending is to be performed is registered (S20007). When a target slave to which resending is to be performed is registered, that is, when the number of the resending slave number 1232 is one or more, resending is executed. The resending procedure is the same as that in the first embodiment. In the second embodiment, unlike the first embodiment, resending is unconditionally executed once for all slaves registered in the resending list.

Note that the resending method in the second embodiment (S20007 in Fig. 7 and onward) may be changed to the resending method in the first embodiment (S10007 in Fig. 6 and onward), and, resending may be performed multiple times for the same slave as long as there is a remaining resending time.

### Third Embodiment

Next, a third embodiment of the present invention will be described. Here, since the difference between the first and second embodiments and the third embodiment is only about counting of the expected communication time 12441, only this difference will be described below.

In the first and second embodiments, before the start of exchange of control data, the command data for counting and the response data for counting are used to count the expected communication time of each slave in accordance with the procedure illustrated in Fig. 4, and the result is saved in the slave list 124. After the exchange of control data, reference is made to the value stored in the slave list 124.

In contrast, in the third embodiment, after the start of exchange of control data, the counting timer 132 is activated before sending command data (between S10002 and S10003 in Fig. 6 and between S20002 and S20003 in Fig. 7). After a successful determination of a sending process/receiving process (between S10005 and S10006 in Fig. 6 and between S20005 and S20006 in Fig. 7), the counting timer 132 is stopped, and the expected communication time is calculated from the current time of the timer. Using the calculated expected communication time, the expected communication time 12441 of the slave in the slave list 124 is updated. Here, instead of using the result of calculation in every communication period, the average value obtained in multiple calculations may be used as the expected communication time 12441 to be updated.

In this manner, since resending can be executed without exceeding the preset upper limit, even when resending occurs, the communication period can be prevented from fluctuating. In a motion control system including machine tools and mounters, a motion controller can form a control loop with slave devices through communication in a fixed period.

## Claims

1. A master/slave communication system in which one master (1) is connected to one or multiple slaves (21-24) through a serial transmission line (30-34), and control data is exchanged between the master and the slaves in a predetermined communication period,
the master comprising means for registering, for each of the slaves, an expected communication time (12441) needed to exchange the control data, the system **characterized by** the master further comprising:
means for registering the slave in which a communication error is detected during exchange of the control data in the communication period, and
means for re-executing exchange of the control data with the registered slave in the same communication period as that in which the communication error is detected,
wherein the means for re-executing exchange of the control data calculates a remaining resending time (1236) that can be used to re-execute exchange of the control data and, when the remaining resending time is longer than the expected communication time of the registered slave, resends the control data.

2. The master/slave communication system according to claim 1, wherein an initial value of the remaining resending time is an upper resending time limit obtained by subtracting a total of the expected communication times of all the slaves from the communication period, and, every time the resending is executed, the expected communication time corresponding to the resending is subtracted from the remaining resending time.

3. A master/slave communication system in which one master (1) is connected to one or multiple slaves (21-24) through a serial transmission line (30-34), and control data is exchanged between the master and the slaves in a predetermined communication period,
the master comprising means for registering, for each of the slaves, an expected communication time (12441) needed to exchange the control data, the system **characterized by** further comprising:
means for registering the slave in which a communication error is detected during exchange of the control data in the communication period, and
means for re-executing exchange of the control data with the registered slave in the same communication period as that in which the communication error is detected,
wherein the means for registering the slave registers the slave in which the communication error is detected during exchange of the control data, in a case where a remaining resending time (1236) that can be used to re-execute exchange of the control data is calculated, and the remaining resending time is longer than the expected communication time of the registered slave, and
wherein the means for re-executing exchange of the control data resends the control data to the registered slave.

4. The master/slave communication system according to claim 3, wherein an initial value of the remaining resending time is an upper resending time limit obtained by subtracting a total of the expected communication times of all the slaves from the communication period, and, every time a slave in which the communication error is detected is registered, the expected communication time corresponding to the slave is subtracted from the remaining resending time.

5. The master/slave communication system according to claim 1 or 3, wherein the master sends command data for counting to the slave before exchange of the control data is executed, the slave having received the command data for counting sends response data for counting, and the master counts time from sending of the command data for counting to receiving of the response data for counting, thereby calculating the expected communication time.

6. The master/slave communication system according to claim 1 or claim 3, wherein the master counts an exchange time of the control data for each of the slaves during exchange of the control data, and updates the expected communication time on the basis of a counting result.

7. A master/slave communication method according to which one master (1) is connected to one or multiple slaves (21-24) through a serial transmission line (30-34), and control data is exchanged between the master and the slaves in a predetermined communication period, the method comprising, in the master:
the step for registering, for each of the slaves, an expected communication time (12441) needed to exchange the control data, the method **characterized by** further comprising, in the master:
the step for registering the slave in which a communication error is detected during exchange of the control data in the communication period, and
the step for re-executing exchange of the control data with the registered slave in the same communication period as that in which the communication error is detected,
wherein the step for re-executing exchange of the control data calculates a remaining resending time (1236) that can be used to re-execute exchange of the control data and, when the remaining resending time is longer than the expected communication time of the registered slave, resends the control data.

8. A master/slave communication method according to claim 7, the method comprising:
a process of the master, which is executed in the individual communication period, comprising the step of sending the control data to the slaves;
the step of receiving the control data from the slaves;
the step of repeating, for each of the slaves, the step of unconditionally registering, as a target to which resending is to be performed, the slave when a communication error is detected in the sending step or the receiving step;
the step of comparing a remaining resending time that can be used to re-execute exchange of the control data with an expected communication time needed to exchange the control data of the slave; and
the step of re-executing exchange of the control data when the remaining resending time is longer than the expected communication time of the registered slave.

9. A master/slave communication method according to claim 8, the process of the master further comprising the step of taking out the slave registered as the target to which resending is to be performed between the step of repeating, for each of the slaves, the step of unconditionally registering and the step of comparing a remaining resending time.

10. The master/slave communication method according to any one of claims 7 to 9, wherein an initial value of the remaining resending time is an upper resending time limit obtained by subtracting a total of the expected communication times of all the slaves from the communication period, and, every time the resending is executed, the expected communication time corresponding to the resending is subtracted from the remaining resending time.

11. A master/slave communication method according to which one master (1) is connected to one or multiple slaves (21-24) through a serial transmission line (30-34), and control data is exchanged between the master and the slaves in a predetermined communication period, the method comprising, in the master:
the step for registering, for each of the slaves, an expected communication time (12441) needed to exchange the control data, the method **characterized by** further comprising, in the master:
the step for registering the slave in which a communication error is detected during exchange of the control data in the communication period, and
the step for re-executing exchange of the control data with the registered slave in the same communication period as that in which the communication error is detected,
wherein the step for registering the slave registers the slave in which the communication error is detected during exchange of the control data, in a case where a remaining resending time (1236) that can be used to re-execute exchange of the control data is calculated, and the remaining resending time is longer than the expected communication time of the registered slave, and
wherein the step for re-executing exchange of the control data resends the control data to the registered slave.

12. A master/slave communication method according to claim 11, the method comprising:
a process of the master, which is executed in the individual communication period, comprising:
the step of sending the control data to the slaves;
the step of receiving the control data from the slaves;
the step of repeating, for each of the slaves, the step of registering, when a communication error is detected in the sending step or the receiving step, a slave in which the communication error is detected as a target to which resending is to be performed, only when a remaining resending time that can be used to re-execute exchange of the control data is longer than an expected communication time needed to exchange the control data of the slave;
and
the step of re-executing exchange of the control data with the slave.

13. A master/slave communication method according to claim 12, the process of the master further comprising the step of taking out the slave registered as the target to which resending is to be performed, between the step of repeating, for each of the slaves, the step of registering and the step of re-executing exchange of the control data with the slave.

14. The master/slave communication method according to any one of claims 11 to 13, wherein an initial value of the remaining resending time is an upper resending time limit obtained by subtracting a total of the expected communication times of all the slaves from the communication period, and, every time a slave in which the communication error is detected is registered, the expected communication time corresponding to the slave is subtracted from the remaining resending time.

15. The master/slave communication method according to any one of claims 7 to 14, wherein command data for counting is sent to the slave before exchange of the control data is executed, the slave having received the command data for counting sends response data for counting, and the master counts time from sending of the command data for counting to receiving of the response data for counting, thereby calculating the expected communication time.

16. The master/slave communication method according to any one of claims 7 to 14, wherein an exchange time of the control data for each of the slaves is counted during exchange of the control data, and the expected communication time is updated on the basis of a counting result.

17. Use of the master/slave communication system according to claims 1 to 6, for a manufacturing apparatus in a manufacturing site.

## Patentansprüche

1. Master-Slave-Kommunikationssystem, in dem ein Master (1) durch eine serielle Übertragungsleitung (30 - 34) mit einem oder mehreren Slaves (21 - 24) verbunden ist und Steuerdaten zwischen dem Master und den Slaves in einer vorgegebenen Kommunikationszeitspanne übertragen werden,
wobei der Master Mittel zum Registrieren einer erwarteten für das Austauschen der Steuerdaten notwendigen Kommunikationszeit (12441) für jeden der Slaves umfasst, wobei das System **dadurch gekennzeichnet, ist, dass** der Master ferner umfasst:
Mittel zum Registrieren des Slave, wobei ein Kommunikationsfehler während des Austauschs der Steuerdaten in der Kommunikationszeitspanne erfasst wird, und
Mittel zum erneuten Ausführen des Austauschs der Steuerdaten mit dem registrierten Slave in der gleichen Kommunikationszeitspanne wie der, in der der Kommunikationsfehler erfasst wird,
wobei die Mittel zum erneuten Ausführen des Austauschs der Steuerdaten eine verbleibende Wiedersendezeit (1236) berechnen, die verwendet werden kann, um den Austausch der Steuerdaten erneut auszuführen, und die Steuerdaten erneut senden, wenn die verbleibende Wiedersendezeit länger als die erwartete Kommunikationszeit des registrierten Slave ist.

2. Master-Slave-Kommunikationssystem nach Anspruch 1, wobei ein Anfangswert der verbleibenden Wiedersendezeit eine obere Wiedersendezeitgrenze ist, die erhalten wird, indem eine Summe der erwarteten Kommunikationszeiten aller Slaves von der Kommunikationszeitspanne subtrahiert wird, und die erwartete Kommunikationszeit, die dem Wiedersenden entspricht, jedes Mal, wenn das Wiedersenden ausgeführt wird, von der verbleibenden Wiedersendezeit subtrahiert wird.

3. Master-Slave-Kommunikationssystem, in dem ein Master (1) durch eine serielle Übertragungsleitung (30 - 34) mit einem oder mehreren Slaves (21 - 24) verbunden ist, und Steuerdaten zwischen dem Master und den Slaves in einer vorgegebenen Kommunikationsperiode ausgetauscht werden,
wobei der Master Mittel zum Registrieren einer erwarteten für das Austauschen der Steuerdaten notwendigen Kommunikationszeit (12441) für jeden der Slaves umfasst, wobei das System **dadurch gekennzeichnet, ist, dass** es ferner umfasst:
Mittel zum Registrieren des Slave, wobei ein Kommunikationsfehler während des Austauschs der Steuerdaten in der Kommunikationszeitspanne erfasst wird, und
Mittel zum erneuten Ausführen des Austauschs der Steuerdaten mit dem registrierten Slave in der gleichen Kommunikationszeitspanne wie der, in der der Kommunikationsfehler erfasst wird,
wobei die Mittel zum Registrieren des Slave in einem Fall, in dem eine verbleibende Wiedersendezeit (1236), die verwendet werden kann, um den Austausch der Steuerdaten erneut auszuführen, berechnet wird und die verbleibende Wiedersendezeit länger als die erwartete Kommunikationszeit des registrierten Slave ist, den Slave registriert, in dem während des Austauschs der Steuerdaten der Kommunikationsfehler erfasst wird, und
wobei die Mittel zum erneuten Ausführen des Austauschs der Steuerdaten die Steuerdaten erneut an den registrierten Slave senden.

4. Master-Slave-Kommunikationssystem nach Anspruch 3, wobei ein Anfangswert der verbleibenden Wiedersendezeit eine obere Wiedersendezeitgrenze ist, die erhalten wird, indem eine Summe der erwarteten Kommunikationszeiten aller Slaves von der Kommunikationszeitspanne subtrahiert wird, und jedes Mal, wenn ein Slave registriert wird, in dem der Kommunikationsfehler erfasst wird, die erwartete Kommunikationszeit, die dem Slave entspricht, von der verbleibenden Wiedersendezeit subtrahiert wird.

5. Master-Slave-Kommunikationssystem nach Anspruch 1 oder 3, wobei der Master Befehlsdaten für das Zählen an den Slave sendet, bevor der Austausch der Steuerdaten ausgeführt wird, wobei der Slave, der die Befehlsdaten für das Zählen empfangen hat, Antwortdaten für das Zählen sendet und der Master die Zeit ab dem Senden der Befehlsdaten für das Zählen bis zum Empfang der Antwortdaten für das Zählen zählt, wodurch die erwartete Kommunikationszeit berechnet wird.

6. Master-Slave-Kommunikationssystem nach Anspruch 1 oder Anspruch 3, wobei der Master eine Austauschzeit der Steuerdaten für jeden der Slaves während des Austauschs der Steuerdaten zählt und die erwartete Kommunikationszeit auf der Basis eines Zählergebnisses aktualisiert.

7. Master-Slave-Kommunikationsverfahren gemäß dem ein Master (1) durch eine serielle Übertragungsleitung (30 - 34) mit einem oder mehreren Slaves (21 - 24) verbunden ist und Steuerdaten zwischen dem Master und den Slaves in einer vorgegebenen Kommunikationszeitspanne übertragen werden, wobei das Verfahren in dem Master umfasst:
den Schritt zum Registrieren einer erwarteten für das Austauschen der Steuerdaten notwendigen Kommunikationszeit (12441) für jeden der Slaves, wobei das Verfahren **dadurch gekennzeichnet, ist, dass** es in dem Master ferner umfasst:
den Schritt zum Registrieren des Slave, in dem während des Austauschs der Steuerdaten in der Kommunikationszeitspanne ein Kommunikationsfehler erfasst wird, und
den Schritt zum erneuten Ausführen des Austauschs der Steuerdaten mit dem registrierten Slave in der gleichen Kommunikationszeitspanne wie der, in der der Kommunikationsfehler erfasst wird,
wobei der Schritt zum erneuten Ausführen des Austauschs der Steuerdaten eine verbleibende Wiedersendezeit (1236) berechnet, die verwendet werden kann, um den Austausch der Steuerdaten erneut auszuführen, und die Steuerdaten erneut sendet, wenn die verbleibende Wiedersendezeit länger als die erwartete Kommunikationszeit des registrierten Slave ist.

8. Master-Slave-Kommunikationsverfahren nach Anspruch 7, wobei das Verfahren umfasst:
einen Prozess des Master, der in der einzelnen Kommunikationszeitspanne ausgeführt wird, der umfasst:
den Schritt des Sendens der Steuerdaten an die Slaves;
den Schritt des Empfangens der Steuerdaten von den Slaves;
den Schritt des Wiederholens der bedingungslosen Registrierung des Slave als ein Ziel, an welches das erneute Senden durchgeführt werden soll, für jeden der Slaves, wenn ein Kommunikationsfehler in dem Sendeschritt oder dem Empfangsschritt erfasst wird;
den Schritt des Vergleichens einer verbleibenden Wiedersendezeit, die verwendet werden kann, um den Austausch der Steuerdaten erneut auszuführen, mit einer erwarteten Kommunikationszeit, die benötigt wird, um die Steuerdaten des Slave auszutauschen; und
den Schritt des erneuten Austauschs der Steuerdaten, wenn die verbleibende Wiedersendezeit länger als die erwartete Kommunikationszeit des registrierten Slave ist.

9. Master-Slave-Kommunikationsverfahren nach Anspruch 8, wobei der Prozess des Master ferner den Schritt zum Herausnehmen des Slave, der als ein Ziel registriert ist, an den das erneute Senden durchgeführt werden soll, zwischen dem Wiederholungsschritt für jeden der Slaves, dem Schritt zum bedingungslosen Registrieren und dem Schritt des Vergleichens einer verbleibenden Wiedersendezeit umfasst.

10. Master-Slave-Kommunikationsverfahren nach einem der Ansprüche 7 bis 9, wobei ein Anfangswert der verbleibenden Wiedersendezeit eine obere Wiedersendezeitgrenze ist, die erhalten wird, indem eine Summe der erwarteten Kommunikationszeiten aller Slaves von der Kommunikationszeitspanne subtrahiert wird, und die erwartete Kommunikationszeit, die dem Wiedersenden entspricht, jedes Mal, wenn das Wiedersenden ausgeführt wird, von der verbleibenden Wiedersendezeit subtrahiert wird.

11. Master-Slave-Kommunikationsverfahren, in dem ein Master (1) durch eine serielle Übertragungsleitung (30 - 34) mit einem oder mehreren Slaves (21 - 24) verbunden ist und Steuerdaten zwischen dem Master und den Slaves in einer vorgegebenen Kommunikationszeitspanne übertragen werden, wobei das Verfahren in dem Master umfasst:
den Schritt zum Registrieren einer erwarteten für das Austauschen der Steuerdaten notwendigen Kommunikationszeit (12441) für jeden der Slaves, wobei das Verfahren **dadurch gekennzeichnet, ist, dass** es in dem Master ferner umfasst:
den Schritt zum Registrieren des Slave, in dem während des Austauschs der Steuerdaten in der Kommunikationszeitspanne ein Kommunikationsfehler erfasst wird, und
den Schritt zum erneuten Ausführen des Austauschs der Steuerdaten mit dem registrierten Slave in der gleichen Kommunikationszeitspanne wie der, in der der Kommunikationsfehler erfasst wird,
wobei der Schritt zum Registrieren des Slave in einem Fall, in dem eine verbleibende Wiedersendezeit (1236), die verwendet werden kann, um den Austausch der Steuerdaten erneut auszuführen, berechnet wird und die verbleibende Wiedersendezeit länger als die erwartete Kommunikationszeit des registrierten Slave ist, den Slave registriert, in dem während des Austauschs der Steuerdaten der Kommunikationsfehler erfasst wird, und
wobei der Schritt zum erneuten Ausführen des Austauschs der Steuerdaten die Steuerdaten erneut an den registrierten Slave sendet.

12. Master-Slave-Kommunikationsverfahren nach Anspruch 11, wobei das Verfahren umfasst:
einen Prozess des Master, der in der einzelnen Kommunikationszeitspanne ausgeführt wird, der umfasst:
den Schritt des Sendens der Steuerdaten an die Slaves;
den Schritt des Empfangens der Steuerdaten von den Slaves;
den Schritt des Wiederholens des Registrierungsschritts für jeden der Slaves, wenn ein Kommunikationsfehler in dem Sendeschritt oder dem Empfangsschritt erfasst wird, wobei ein Slave, in dem der Kommunikationsfehler erfasst wird, ein Ziel ist, an welches das erneute Senden nur durchgeführt wird, wenn eine verbleibende Wiedersendezeit, die verwendet werden kann, um den Austausch der Steuerdaten erneut auszuführen, länger als eine erwartete Kommunikationszeit, die benötigt wird, um die Steuerdaten des Slave auszutauschen ist; und
den Schritt des erneuten Ausführens des Austauschs der Steuerdaten mit dem Slave.

13. Master-Slave-Kommunikationsverfahren nach Anspruch 12, wobei der Prozess des Master ferner den Schritt zum Herausnehmen des Slave, der als ein Ziel registriert ist, an den das erneute Senden durchgeführt werden soll, zwischen dem Wiederholungsschritt für jeden der Slaves, dem Registrierungsschritt und dem Schritt zum erneuten Austauschen der Steuerdaten mit dem Slave umfasst.

14. Master-Slave-Kommunikationsverfahren nach einem der Ansprüche 11 bis 13, wobei ein Anfangswert der verbleibenden Wiedersendezeit eine obere Wiedersendezeitgrenze ist, die erhalten wird, indem eine Summe der erwarteten Kommunikationszeiten aller Slaves von der Kommunikationszeitspanne subtrahiert wird, und jedes Mal, wenn ein Slave registriert wird, in dem der Kommunikationsfehler erfasst wird, die erwartete Kommunikationszeit, die dem Slave entspricht, von der verbleibenden Wiedersendezeit subtrahiert wird.

15. Master-Slave-Kommunikationsverfahren nach einem der Ansprüche 7 bis 14, wobei Befehlsdaten für das Zählen an den Slave gesendet werden, bevor der Austausch der Steuerdaten ausgeführt wird, wobei der Slave, der die Befehlsdaten für das Zählen empfangen hat, Antwortdaten für das Zählen sendet und der Master die Zeit ab dem Senden der Befehlsdaten für das Zählen bis zum Empfang der Antwortdaten für das Zählen zählt, wodurch die erwartete Kommunikationszeit berechnet wird.

16. Master-Slave-Kommunikationsverfahren nach einem der Ansprüche 7 bis 14, wobei eine Austauschzeit der Steuerdaten für jeden der Slaves während des Austauschs der Steuerdaten gezählt und die erwartete Kommunikationszeit auf der Basis eines Zählergebnisses aktualisiert wird.

17. Master-Slave-Kommunikationsverfahren nach den Ansprüchen 1 bis 6 für eine Herstellungsvorrichtung an einem Herstellungsstandort.

## Revendications

1. Système de communication maître/esclave dans lequel un dispositif maître (1) est connecté à un ou plusieurs dispositifs esclaves (21 à 24) par l'intermédiaire d'une ligne de transmission en série (30 à 34), et des données de commande sont échangées entre les dispositif maître et esclaves au cours d'une période de communication prédéterminée,
le dispositif maître comprenant des moyens destinés à enregistrer, pour chacun des dispositifs esclaves, un temps de communication attendu (12441) nécessaire afin d'échanger les données de commande, le système étant **caractérisé par le fait que** le dispositif maître comprend, en outre :
un moyen destiné à enregistrer le dispositif esclave sur lequel une erreur de communication a été détectée au cours de l'échange des données de commande dans la période de communication, et
un moyen destiné à ré-exécuter un échange des données de commande avec le dispositif esclave enregistré dans la même période de communication que celle dans laquelle l'erreur de communication a été détectée,
dans lequel le moyen de ré-exécution d'échange des données de commande calcule un temps de ré-envoi restant (1236) qui peut être utilisé afin de ré-exécuter l'échange des données de commande et, lorsque le temps de ré-envoi restant est supérieur au temps de communication attendu du dispositif esclave enregistré, il ré-envoi les données de commande.

2. Système de communication maître/esclave selon la revendication 1, dans lequel une valeur initiale du temps de ré-envoi restant est une limite supérieure de temps de ré-envoi obtenue par soustraction à partir d'un total des temps de communication attendus de l'ensemble des dispositifs esclaves d'une période de communication, et, chaque fois que le ré-envoi est exécuté, le temps de communication attendu correspondant au ré-envoi est déduit du temps de ré-envoi restant.

3. Système de communication maître/esclave dans lequel un dispositif maître (1) est connecté à un ou plusieurs dispositifs esclaves (21 à 24) par l'intermédiaire d'une ligne de transmission en série (30 à 34), et des données de commande sont échangées entre le dispositif maître et les dispositifs esclaves au cours d'une période de communication prédéterminée,
le dispositif maître comprenant des moyens destinés à enregistrer, pour chacun des dispositifs esclaves, un temps de communication attendu (12441) nécessaire afin d'échanger les données de commande, le système étant **caractérisé par le fait qu'**il comprend, en outre :
un moyen destiné à enregistrer le dispositif esclave sur lequel une erreur de communication a été détectée au cours de l'échange des données de commande dans la période de communication, et
un moyen destiné à ré-exécuter un échange des données de commande avec le dispositif esclave enregistré dans la même période de communication que celle dans laquelle l'erreur de communication a été détectée,
dans lequel le moyen destiné à enregistrer le dispositif esclave enregistre le dispositif esclave sur lequel l'erreur de communication a été détectée au cours de l'échange des données de commande, dans un cas dans lequel un temps de ré-envoi restant (1236) qui peut être utilisé afin de ré-exécuter l'échange des données de commande est calculé, et le temps de ré-envoi restant est supérieur au temps de communication attendu du dispositif esclave enregistré, et
dans lequel le moyen de ré-exécution de l'échange des données de commande ré-envoie les données de commande au dispositif esclave enregistré.

4. Système de communication maître/esclave selon la revendication 3, dans lequel une valeur initiale du temps de ré-envoi restant est une limite supérieure du temps de ré-envoi obtenue par soustraction à partir d'un total des temps de communication attendus de tous les dispositifs esclaves, de la période de communication, et, chaque fois qu'un dispositif esclave sur lequel l'erreur de communication a été détectée est enregistré, le temps de communication attendu correspondant au dispositif esclave est déduit du temps de ré-envoi restant.

5. Système de communication maître/esclave selon la revendication 1 ou 3, dans lequel le dispositif maître envoie des données d'instruction de comptage au dispositif esclave avant que l'échange des données de commande soit exécuté, le dispositif esclave ayant reçu les données d'instruction de comptage envoie des données de réponse de comptage, et le dispositif maître compte le temps de l'envoi des données d'instruction de comptage à la réception des données de réponse de comptage, calculant ainsi le temps de communication attendu.

6. Système de communication maître/esclave selon la revendication 1 ou 3, dans lequel le dispositif maître compte un temps d'échange des données de commande pour chacun des dispositifs esclaves au cours de l'échange des données de commande, et actualise le temps de communication attendu sur la base d'un résultat de comptage.

7. Procédé de communication maître/esclave selon lequel un dispositif maître (1) est connecté à un ou plusieurs dispositifs esclaves (21 à 24) par l'intermédiaire d'une ligne de transmission en série (30 à 34), et des données de commande sont échangées entre le dispositif maître et les dispositifs esclaves au cours d'une période de communication prédéterminée, le procédé comprenant, sur le dispositif maître :
une étape d'enregistrement, pour chacun des dispositifs esclaves, d'un temps de communication attendu (12441) nécessaire pour échanger les données de commande, le procédé étant **caractérisé par le fait qu'**il comprend, en outre, sur le dispositif maître :
l'étape d'enregistrement du dispositif esclave sur lequel une erreur de communication a été détectée au cours d'un échange des données de commande dans la période de communication, et
l'étape de ré-exécution de l'échange des données de commande avec le dispositif esclave enregistré dans la même période de communication que celle dans laquelle l'erreur de communication a été détectée,
dans lequel l'étape de ré-exécution de l'échange des données de commande calcule un temps de ré-envoi restant (1236) qui peut être utilisé afin de ré-exécuter l'échange des données de commande et, lorsque le temps de ré-envoi restant est supérieur à la période de communication attendue du dispositif esclave enregistré, elle ré-envoie les données de commande.

8. Procédé de communication maître/esclave selon la revendication 7, le procédé comprenant :
une opération sur le dispositif maître, qui est exécutée dans la période de communication individuelle, comprenant l'étape d'envoi des données de commande aux dispositifs esclaves ;
l'étape de réception des données de commande à partir des dispositifs esclaves ;
l'étape de répétition, pour chacun des dispositifs esclaves, de l'étape d'enregistrement inconditionnel, en tant que cible à laquelle le ré-envoi doit être exécuté, du dispositif esclave lorsqu'une erreur de communication a été détectée dans l'étape d'envoi ou l'étape de réception ;
l'étape de comparaison d'un temps de ré-envoi restant qui peut être utilisé afin de ré-exécuter l'échange des données de commande à un temps de communication attendu nécessaire afin d'échanger les données de commande du dispositif esclave ; et
l'étape de ré-exécution d'échange des données de commande lorsque le temps de ré-envoi restant est supérieur au temps de communication attendu du dispositif esclave enregistré.

9. Procédé de communication maître/esclave selon la revendication 8, l'opération sur le dispositif maître comprenant, en outre, l'étape de retrait du dispositif esclave enregistré en tant que la cible à laquelle le ré-envoi doit être exécuté entre l'étape de répétition, pour chacun des dispositifs esclaves, l'étape d'enregistrement inconditionnel et l'étape de comparaison d'un temps de ré-envoi restant.

10. Procédé de communication maître/esclave selon l'une quelconque des revendications 7 à 9, dans lequel une valeur initiale du temps de ré-envoi restant est une limite supérieure du temps de ré-envoi obtenue par soustraction à partir d'un total des temps de communication attendus de l'ensemble des dispositifs esclaves, de la période de communication, et, chaque fois que le ré-envoi est exécuté, le temps de communication attendu correspondant au ré-envoi est soustrait du temps de ré-envoi restant.

11. Procédé de communication maître/esclave selon lequel un dispositif maître (1) est connecté à un ou plusieurs dispositifs esclaves (21 à 24) par l'intermédiaire d'une ligne de transmission en série (30 à 34), et des données de commande sont échangées entre le dispositif maître et les dispositifs esclaves dans une période de communication prédéterminée, le procédé comprenant, sur le dispositif maître :
l'étape d'enregistrement, pour chacun des dispositifs esclaves, d'un temps de communication attendu (12441) nécessaire afin d'échanger les données de commande, le procédé étant **caractérisé par le fait qu'**il comprend, en outre, sur le dispositif maître :
l'étape d'enregistrement du dispositif esclave sur lequel une erreur de communication a été détectée au cours de l'échange des données de commande dans la période de communication, et
l'étape de ré-exécution de l'échange des données de commande avec le dispositif esclave enregistré dans la même période de communication que celle dans laquelle l'erreur de communication a été détectée,
dans lequel l'étape d'enregistrement du dispositif esclave enregistre le dispositif esclave sur lequel l'erreur de communication a été détectée au cours de l'échange des données de commande, dans un cas dans lequel un temps de ré-envoi restant (1236) qui peut être utilisé afin de ré-exécuter l'échange des données de commande est calculé, et le temps ré-envoi restant est supérieur au temps de communication attendu du dispositif esclave enregistré, et
dans lequel l'étape de ré-exécution de l'échange des données de commande ré-envoie les données de commande au dispositif esclave enregistré.

12. Procédé de communication maître/esclave selon la revendication 11, le procédé comprenant :
une opération sur le dispositif maître, qui est exécutée au cours de la période de communication individuelle, comprenant :
l'étape d'envoi des données de commande aux dispositifs esclaves ;
l'étape de réception des données de commande à partir des dispositifs esclaves ;
l'étape de répétition, pour chacun des dispositifs esclaves, de l'étape d'enregistrement, lorsqu'une erreur de communication a été détectée dans l'étape d'envoi ou l'étape de réception, d'un dispositif esclave sur lequel l'erreur de communication a été détectée en tant que cible à laquelle le ré-envoi doit être exécuté, uniquement lorsqu'un temps de ré-envoi restant qui peut être utilisé afin de ré-exécuter l'échange des données de commande est supérieur à un temps de communication attendu nécessaire afin d'échanger les données de commande du dispositif esclave ; et
l'étape de ré-exécution de l'échange des données de commande avec le dispositif esclave.

13. Procédé de communication maître/esclave selon la revendication 12, l'opération sur le dispositif maître comprenant, en outre, l'étape de retrait du dispositif esclave enregistré en tant que la cible à laquelle le ré-envoi doit être exécuté, entre l'étape de répétition, pour chacun des dispositifs esclaves, l'étape d'enregistrement et l'étape de ré-exécution d'échange des données de commande avec le dispositif esclave.

14. Procédé de communication maître/esclave selon l'une quelconque des revendications 11 à 13, dans lequel une valeur initiale du temps de ré-envoi restant est une limite supérieure du temps de ré-envoi obtenue par soustraction à partir d'un total des temps de communication attendus de l'ensemble des dispositifs esclaves, de la période de communication, et, chaque fois qu'un dispositif esclave sur lequel une erreur de communication a été détectée est enregistré, le temps de communication attendu correspondant au dispositif esclave est déduit du temps de ré-envoi restant.

15. Procédé de communication maître/esclave selon l'une quelconque des revendications 7 à 14, dans lequel des données d'instruction de comptage sont envoyées au dispositif esclave avant que l'échange des données de commande soit exécuté, le dispositif esclave ayant reçu les données d'instruction de comptage envoie les données de réponse de comptage, et le dispositif maître compte le temps à partir de l'envoi des données d'instruction de comptage jusqu'à la réception des données de réponse de comptage, calculant ainsi le temps de communication attendu.

16. Procédé de communication maître/esclave selon l'une quelconque des revendications 7 à 14, dans lequel un temps d'échange des données de commande pour chacun des dispositifs esclaves est compté au cours de l'échange des données de commande, et le temps de communication attendu est actualisé sur la base d'un résultat de comptage.

17. Utilisation du système de communication maître/esclave selon les revendications 1 à 6, pour un dispositif de fabrication sur un site de fabrication.
